# EUROPÄISCHE PATENTSCHRIFT

(11) **EP 0 403 426 B1**
(45) Veröffentlichungstag und Bekanntmachung des Hinweises auf die Patenterteilung: **23.06.1993**
(21) Anmeldenummer: 90810398.9
(22) Anmeldetag: 30.05.1990
(51) Int. Cl.: G01B 3/50, G01B 5/12

(54) **Verfahren und Vorrichtung zum Kalibrieren der Innenfläche eines rohrförmigen Teils**
Method and device for calibrating the internal surface of a tubular part
Méthode et dispositif pour calibrer la surface interne d'une partie tubulaire

(30) Priorität: 14.06.1989 CH 2228/89
(43) Veröffentlichungstag der Anmeldung: 19.12.1990
(73) Patentinhaber: ALUSUISSE-LONZA SERVICES AG, 8034 Zürich (CH)
(72) Erfinder: Stengele, Robert, D-7702 Gottmadingen (DE)

(56) Entgegenhaltungen:
- FR-A- 2 483 601
- GB-A- 486 734

## Beschreibung

Die Erfindung betrifft eine Vorrichtung zum Kalibrieren der Innenfläche eines rohrförmigen Teils, insbesondere aus Aluminium oder einer Aluminiumlegierung, mit einem Kalibrierdorn, sowie ein zugehöriges Verfahren durch Befetten mit einem Schmiermittel, Kalibrieren und Entfetten.

Bei einem bekannten Verfahren wird zunächst die Innenfläche des zu kalibrierenden, rohrförmigen Teils mit einem Schmiermittel versehen. In einem zweiten Schritt erfolgt dann der eigentliche Kalibriervorgang mittels eines Kalibrierdornes. In einem dritten Arbeitsgang wird schliesslich das kalibrierte Teil entfettet.

Zum Befetten wird ein verhältnismässig zähflüssiges Schmiermittel eingesetzt, welches nach dem Kalibriervorgang mittels eines Lösungsmittels wieder entfernt wird. Hierbei entstehen hohe Verluste an Schmiermittel, welches überdies noch entsorgt werden muss.

FR-A-2 483 601 und GB-A-486 734 zeigen den Stand der Technik der Messung und Prüfung des Innendurchmessers von Rohren und Bohrungen.

Angesichts dieser Gegebenheiten hat sich der Erfinder das Ziel gesetzt, eine Vorrichtung der eingangs erwähnten Art sowie ein zugehöriges Verfahren zu schaffen, welche das Befetten und Entfetten während des Kalibriervorganges ohne zusätzlichen Arbeitsaufwand und ohne Schmiermittelverluste ermöglichen.

In Bezug auf die Vorrichtung wird die Aufgabe erfindungsgemäss dadurch gelöst, dass am Kalibrierdorn beidends koaxial zur Dornachse Dichtungsringe unter Bildung je eines Ringspaltes zwischen jedem der Dichtungsringe und dem jeweiligen Ende des Kalibrierdornes angeordnet sind und die Ringspalten mit Zufuhrleitungen für ein Schmiermittel in Verbindung stehen. Hierbei können Einrichtungen zur Sammlung und Rückführung des Schmiermittels angeordnet sein.

Der querschnitt des zu kalibrierenden, rohrförmigen Teils muss nicht notwendigerweise kreisrund sein sondern kann eine beliebige geometrische Form aufweisen.

In Bezug auf das zugehörige Verfahren wird die Aufgabe erfindungsgemäss dadurch gelöst, dass das Befetten der Innenfläche des rohrförmigen Teils mit Schmiermittel während des Arbeitshubes und das Entfetten während des Leerhubes des Kalibrierdornes durchgeführt wird.

Das erfindungsgemässe Verfahren erlaubt den Einsatz eines dünnflüssigen Schmiermittels, welches problemlos während des Kalibriervorganges auf die Innenfläche des rohrförmigen Teils aufgetragen und wieder entfernt werden kann.

Bei einer bevorzugten Ausführung des Verfahrens wird das Schmiermittel während den Hubbewegungen des Kalibrierdornes über einen von den beiden Enden des Kalibrierdornes und angrenzenden Dichtungsringen gebildeten Ringspalt auf die Innenseite des rohrförmigen Teils aufgetragen und von den Dichtungsringen wieder abgestreift.

Das eingesetzte Schmiermittel kann gesammelt, gereinigt und wiederverwendet werden. Vorteilhafterweise wird das Schmiermittel in einem geschlossenen Kreislauf geführt; damit wird die Umweltbelastung auf ein Minimum reduziert.

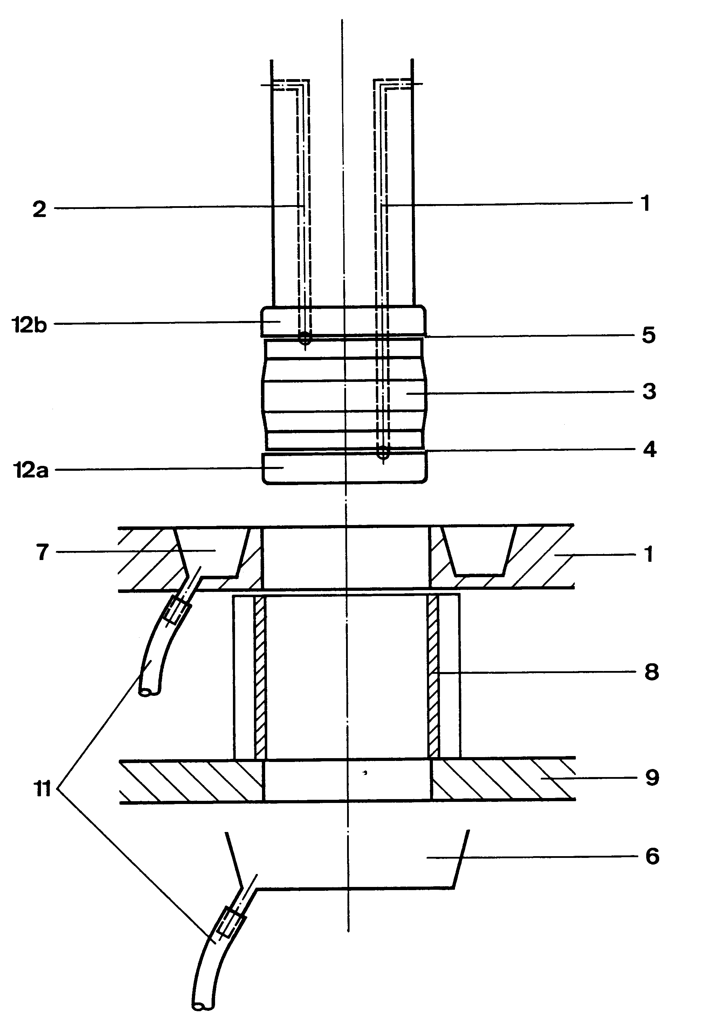

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur den schematisierten querschnitt durch eine erfindungsgemässe Vorrichtung.

Eine Kalibriervorrichtung weist einen Kalibrierdorn 3 mit beidends angeordneten, je einen Ringspalt 4,5 begrenzenden Dichtungsringen 12a,b aus elastischem Kunststoff auf. Der Durchmesser der Dichtungsringe 12a,b enspricht dem Innendurchmesser des zu kalibrierenden, rohrförmigen Teils 8 aus beispielsweise einer Aluminiumlegierung, welcher zwischen einer Druckplatte 9 und einer Abstreiferplatte 10 angeordnet ist. Die Ringspalten 4,5 sind über Zufuhrleitungen 1,2 mit einem -- in der Zeichnung nicht dargestelten -- Behälter für ein Schmiermittel verbunden. Die Abstreiferplatte 10 weist einen Ringkanal 7 zur Sammlung des beim Leerhub des Kalibrierdornes 3 austretenden Schmiermittels auf. Unter der Druckplatte 9 ist eine Auffangwanne 6 für das beim Arbeitshub des Kalibrierdornes 3 austretende Schmiermittel angeordnet. Ueber Abflussleitungen 11 wird das im Ringkanal 7 und in der Auffangwanne 6 gesammelte Schmiermittel abgeführt und nach einer Reinigung wieder dem Schmiermittelbehälter zugeführt, sodass ein geschlossener Kreislauf gebildet wird.

Während des Arbeitshubes des Kalibrierdornes 3 wird das Schmiermittel über den unteren Ringspalt 4 auf die Innenfläche des rohrförmigen Teils 8 aufgetragen und vom oberen Dichtungsring 12b wieder abgestreift. Entsprechend erfolgt das Befetten während des Leerhubes über den oberen Ringspalt 5 und das Entfetten mit dem unteren Dichtungsring 12a.

## Patentansprüche

1. Vorrichtung zum Kalibrieren der Innenfläche eines rohrförmigen Teils (8), mit einem Kalibrierdorn (3),
dadurch gekennzeichnet,
dass am Kalibrierdorn (3) beidends koaxial zur Dornachse Dichtungsringe (12a,b) unter Bildung je eines Ringspaltes (4,5) zwischen jedem der Dichtungsringe (12a,b) und dem jeweiligen Ende des Kalibrierdornes (3) angeordnet sind und die Ringspalten (4,5) mit Zufuhrleitungen (1,2) für ein Schmiermittel in Verbindung stehen.

2. Vorrichtung nach Anspruch 1, dadurch gekennzeichnet, dass Einrichtungen (6,7) zur Sammlung und Rückführung des Schmiermittels angeordnet sind.

3. Verfahren zum Kalibrieren der Innenfläche eines rohrförmigen Teils, insbesondere aus Aluminium oder einer Aluminiumlegierung, mittels eines Kalibrierdornes nach Anspruch 1 oder 2, durch Befetten mit einem Schmiermittel, Kalibrieren und Entfetten, dadurch gekennzeichnet, dass das Befetten der Innenfläche des rohrförmigen Teils mit Schmiermittel während des Arbeitshubes und das Entfetten während des Leerhubes des Kalibrierdornes durchgeführt wird.

4. Verfahren nach Anspruch 3, dadurch gekennzeichnet, dass das Schmiermittel während den Hubbewegungen des Kalibrierdornes (3) über einen von den beiden Enden des Kalibrierdornes (3) und angrenzenden Dichtungsringen (12a,b) gebildeten Ringspalt (4,5) auf die Innenfläche des rohrförmigen Teils (8) aufgetragen und von den Dichtungsringen (12a,b) wieder abegstreift wird.

5. Verfahren nach Anspruch 3 oder 4, dadurch gekennzeichnet, dass das eingesetzte Schmiermittel gesammelt, gereinigt und wiederverwendet wird.

6. Verfahren nach einem der Ansprüche 3 bis 5, dadurch gekennzeichnet, dass das Schmiermittel in einem geschlossenen Kreislauf geführt wird.

## Claims

1. Device for calibrating the internal surface of a tubular part (8), comprising a mandrel (3), characterised in that sealing rings (12a, b) are arranged at either end of the mandrel (3) coaxial with the mandrel axis, thereby forming an annular gap (4, 5) between each of the sealing rings (12a, b) and the respective end of the mandrel (3), and that the annular gaps (4, 5) communicate with feed lines (1, 2) for a lubricant.

2. Device according to claim 1, characterised in that means (6, 7) are provided for collecting and recycling the lubricant.

3. Method for calibrating the internal surface of a tubular part, especially made of aluminium or an aluminium alloy, by means of a mandrel according to claim 1 or claim 2, consisting in greasing with a lubricant, calibrating and degreasing, characterised in that the internal surface of the tubular part is greased with lubricant during the working stroke of the mandrel and degreasing is effected during the return stroke of the mandrel.

4. Method according to claim 3, characterised in that the lubricant is applied to the internal surface of the tubular part (8) via an annular gap (4, 5) formed by the two ends of the mandrel (3) and adjacent sealing rings (12a, b) during the lifting movements of the mandrel (3) and is wiped off again by the sealing rings (12a, b).

5. Method according to claim 3 or claim 4, characterised in that the lubricant used is collected, cleaned and reused.

6. Method according to one of claims 3 to 5, characterised in that the lubricant is recycled.

## Revendications

1. Dispositif de calibration de la surface intérieure d'une pièce tubulaire (8), à l'aide d'un mandrin de calibration (3), caractérisé en ce qu'aux deux extrémités du mandrin de calibration (3), des bagues d'étanchéité (12a, b) sont disposées coaxialement à l'axe du mandrin et forment un interstice annulaire (4, 5) entre chacune des bagues d'étanchéité (12a, b) et l'extrémité correspondante du mandrin de calibration (3), les interstices annulaires (4, 5) étant reliés à des conduites d'amenée (1, 2) d'un lubrifiant.

2. Dispositif selon la revendication 1, caractérisé en ce que des dispositifs (6, 7) de collecte et de renvoi de lubrifiant sont prévus.

3. Procédé de calibration de la surface intérieure d'une pièce tubulaire, en particulier en aluminium ou en alliage d'aluminium, à l'aide d'un mandrin de calibration selon la revendication 1 ou 2, par graissage à l'aide d'un lubrifiant, calibration et dégraissage, caractérisé en ce que le graissage de la surface intérieure de la pièce tubulaire à l'aide de lubrifiant est effectué pendant la course de travail et que le dégraissage est effectué pendant la course à vide du mandrin de calibration.

4. Procédé selon la revendication 3, caractérisé en ce que le lubrifiant est déposé sur la surface intérieure de la pièce tubulaire (8) pendant le déplacement du mandrin de calibration (3), par l'intermédiaire d'un interstice annulaire (4, 5) formé aux deux extrémités du mandrin de calibration (3) par les bagues d'étanchéité (12a, b) qui le délimitent, et est raclé par les bagues d'étanchéité (12a, b).

5. Procédé selon la revendication 3 ou 4, caractérisé en ce que le lubrifiant utilisé est collecté, nettoyé et réutilisé.

6. Procédé selon l'une des revendications 3 à 5, caractérisé en ce que le lubrifiant circule en circuit fermé.
